# EUROPÄISCHE PATENTSCHRIFT

(11) **EP 3 967 902 B1**
(45) Veröffentlichungstag und Bekanntmachung des Hinweises auf die Patenterteilung: **23.08.2023**
(21) Anmeldenummer: 21190948.6
(22) Anmeldetag: 12.08.2021
(51) Int. Cl.: F16H 57/04, F16H 57/027, B60K 17/28

(54) **GETRIEBESCHMIERSYSTEM**
TRANSMISSION LUBRICATION SYSTEM
SYSTÈME DE LUBRIFICATION POUR ENGRENAGES

(30) Priorität: 10.09.2020 DE 102020123650
(43) Veröffentlichungstag der Anmeldung: 16.03.2022
(73) Patentinhaber: Deere & Company, Moline, IL 61265 (US)
(72) Erfinder: RAISCH, STEFAN, 68163 Mannheim (DE)
(74) Vertreter: Dehnhardt, Florian Christopher

(56) Entgegenhaltungen:
- US-A- 4 915 193
- US-A1- 2007 169 583
- US-B2- 10 005 357

## Beschreibung

Die Erfindung betrifft ein Getriebeschmiermittelsystem für ein Fahrzeug.

Schmiermittelsysteme dienen dazu, Schmiermittel an unterschiedlichen Stellen in einem Fahrzeug, insbesondere in Motoren und Getrieben aller Art, zur Verfügung zu stellen. Je nach Anwendungsfall ergeben sich dadurch unterschiedliche Anforderungen.

Getriebe und andere Maschinenteile werden in Gehäusen gelagert, die gleichzeitig als Auffangbehältnis für das Schmiermittel dienen. Meist ist dabei der Gehäuseboden als Ölwanne ausgebildet, in welchem das Öl zurückläuft und von dort erneut abgepumpt und in Umlauf gebracht wird.

Zur Abfuhr von Wärme und auch zur Sicherstellung des Schmierfilms ist dabei eine Grundmenge an Öl festgelegt. Jedoch ist eine überhöhte Ölmenge zu vermeiden. Bei einem zu hohen Pegelstand können sich bewegende Teile ins Öl eintauchen und werden durch den Widerstand abgebremst. Gleichzeitig kommt es durch das Verwirbeln des Öls zu einem Verschäumen, dies führt zu einem temporären Verlust an Schmiermittel im Ölkreislauf, so dass der Ölspiegel absinkt und eventuell der Schmiermittelumlauf zum Erliegen kommt.

In diesem Zusammenhang ist aus der US 2007/0169583 A1 eine Getriebeanordnung für ein Fahrzeug, insbesondere einen landwirtschaftlichen Traktor, bekannt. Die von einem Verbrennungsmotor antreibbare Getriebeanordnung umfasst einen Hauptgetriebeteil, in dem ein Schaltgetriebe des Fahrzeugs angeordnet ist. An einem Gehäuse des Hauptgetriebeteils befindet sich ein erster Getriebeabschnitt, in dem ein Differentialgetriebe des Fahrzeugs untergebracht ist. Ein zweiter Getriebeabschnitt nimmt ein Zapfwellengetriebe des Fahrzeugs auf. Sowohl in dem Hauptgetriebeteil als auch in den zwei Getriebeabschnitten befindet sich Schmiermittel. Im Ruhezustand ist der Schmiermittelpegel in der Getriebeanordnung ausgeglichen, was über einen im Bodenbereich der Getriebeanordnung angeordneten Verbindungskanal erreicht wird, der den gegenüber den zwei Getriebeabschnitten luftdicht abgetrennten Hauptgetriebeteil mit den zwei Getriebeabschnitten verbindet.

Des Weiteren ist eine Luftpumpe vorhanden, die bei Inbetriebnahme der Getriebeanordnung Luft aus den zwei Getriebeabschnitten in den Hauptgetriebeteil fördert. Hierdurch wird im Hauptgetriebeteil ein Überdruck erzeugt, der das Schmiermittel durch den Verbindungskanal in die zwei Getriebeabschnitte verdrängt. Dementsprechend ist der Schmiermittelpegel im Hauptgetriebeteil nahezu vollständig abgefallen, in den zwei Getriebeabschnitten ist der Schmiermittelpegel hingegen entsprechend den Volumenverhältnissen deutlich angestiegen. Zugleich saugt eine Schmiermittelpumpe Schmiermittel über einen Ansaugkanal an und fördert kontinuierlich Schmiermittel über einen Schmiermittelzufuhrkanal auf die im Hauptgetriebeabschnitt befindlichen Getriebeteile. Insoweit treten im Hauptgetriebeteil so gut wie keine Planschverluste auf.

Es ist die Aufgabe der vorliegenden Erfindung einen Schmiermittelkreislauf bereitzustellen, der eine kontinuierliche Schmierung eines Differentialgetriebes erlaubt und dabei Planschverluste oder Verschäumen vermeidet.

Es wird ein Getriebeschmiersystem für ein Fahrzeug vorgeschlagen, zum Sicherstellen von kontinuierlichem Rückfluss eines Schmiermittels, aufweisend ein Differentialgehäuse, ein Getriebegehäuse, einen Schmiermitteltank, eine Ansaugleitung, eine Schmiermittelpumpe, eine Luftansaugpumpe, wobei das Getriebegehäuse mit dem Differentialgehäuse luftdicht verbunden ist, und ein Schmierstoffdurchlass zwischen dem Getriebegehäuse und dem Differentialgehäuse vorgesehen ist, der Schmiermitteltank im Differentialgehäuse vorgesehen ist und eine Schmiermittelansaugöffnung in einem unteren Bereich aufweist, und die Schmiermittelpumpe durch die Ansaugleitung Schmiermittel aus dem Schmiermitteltank befördert, und das Schmiermittel an Schmiermittelstellen im Differentialgehäuse und Getriebegehäuse leitet, und die Luftansaugpumpe Luft aus dem Schmiermitteltank in das Getriebegehäuse pumpt, so dass im Getriebegehäuse ein Luftüberdruck aufrechterhalten wird, und das Differentialgehäuse Umgebungsdruck aufweist, der niedriger ist, als der Luftüberdruck im Getriebegehäuse, und der Luftdruck im Schmiermitteltank niedriger ist, als der Umgebungsdruck im Differentialgehäuse, so dass durch das Luftdruckgefälle der Schmierstoff aus dem Getriebegehäuse in das Differentialgehäuse und weiter in den Schmiermitteltank geleitet wird.

Die Vorsehung des Schmiermitteltanks im Differentialgehäuse zusammen mit dem Luftdruckgefälle stellt eine verbesserte Schmiermittelversorgung zur Verfügung. Das Differentialgetriebe taucht hierbei nicht mehr in das Schmiermittel bzw. in die Schmiermitteloberfläche ein, die üblicherweise im Stand der Technik ausgebildet ist. Durch die Vorsehung des Schmiermittels im Tank werden Planschverluste des Differentialgetriebes vermieden, so wie ein Versschäumen des Schmiermittels und ein gleichzeitiges Absinken der Schmiermittelspiegels. Der Schmiermittelkreislauf erstreckt sich über mehrere Gehäuseteile hinweg und stellt eine kontinuierliche Schmierung sicher mit einem gleichmäßigen Rücklauf in den Schmiermitteltank. Die Anordnung des Schmiermitteltanks zusammen mit der eingestellten Luftdruckdifferenz führt auch im Bereich des Differentialgehäuses zu einem niedrigen Schmiermittelstand außerhalb und einem hohen Schmiermittelstand innerhalb des Schmiermitteltanks.

In einer Ausführung ist der Schmiermitteltank ausgelegt, um eine Differentialanordnung im Differentialgehäuse zu umgeben, derart, dass das Schmiermittel im Tank von der Differentialanordnung getrennt ist.

Die Differentialanordnung besteht aus mehreren miteinander kämmenden Zahnrädern, welche Achsen für den Antrieb mit Leistung versorgen. Die räumliche Trennung des Schmiermittelvorrats im Schmiermitteltank vermeidet, dass die Zahnräder im Schmiermittel eintauchen und reduziert Verluste. Die Zahnräder werden kontinuierlich mit Schmiermittel versorgt, verwirbeln jedoch nicht das gesamte Schmiermittel, welches sich im Tank ansammelt. Die Schmiermittelversorgung erlaubt somit, die Schmiermittelmenge zu reduzieren, wobei gleichzeitig eine ausreichende Versorgung sichergestellt ist.

Bei einer Weiterbildung ist der Schmiermitteltank in einer C-Form aufgebaut, die dazu geeignet ist, eine Differentialanordnung im Differentialgehäuse zu umschließen.

Die Ausbildung des Schmiermitteltanks in einer C-Form erlaubt die Installation aus einer Einbaurichtung im Differentialgehäuse. Hierbei kann das Differentialgehäuse an einer Seite eine Öffnung aufweisen, durch welche der Schmiermitteltank installiert werden kann. Die Öffnung kann gleichzeitig zu Wartungszwecken genutzt werden. Die C-Form erlaubt es, den Schmiermitteltank platzsparend im Differentialgehäuse unterzubringen, bei gleichzeitig maximalem Aufnahmevolumen für das das Schmiermittel.

Bei einer Ausführung saugt die Luftansaugpumpe die Luft aus einem oberen Bereich des Schmiermitteltanks an.

Die Ansaugung sorgt für einen stetigen Unterdruck zwischen der Schmiermitteloberfläche und dem luftdicht abgeschlossenen Schmiermitteltank. Hierdurch steigt das Niveau der Schmiermitteloberfläche an, so dass ein kontinuierlicher Rückfluss des Schmiermittels in den Schmiermitteltank sichergestellt ist. Durch die Ansaugung ergibt sich ein Luftdruckgefälle über den Schmiermitteltank, das Differentialgehäuse und das Getriebegehäuse, wobei der größte Unterdruck im Vergleich zum Umgebungsdruck im Schmiermitteltank ausgebildet ist. Die Ansaugung sorgt gleichzeitig für ein Absondern von Luftblasen im Schmiermittel, so dass eine gleichmäßige Ausbringung des Schmiermittels erfolgt.

In einer Weiterbildung weist der Schmiermitteltank eine Durchgangsöffnung auf, die dazu ausgelegt ist, den Durchgang einer Welle zu ermöglichen.

Der Schmiermitteltank erlaubt die gleichzeitige Verwendung mit einer durchgehenden Welle im Differentialgehäuse. Dies ermöglicht die Installation auch in Anwendungsfällen, die eine weitere Welle erfordern. Dies erlaubt die Installation einer Zapfwelle im Differentialgehäuse oder die Verwendung des Getriebeschmiersystems in derart gestalteten Differentialgehäusen und Maschinen.

Bei einer Ausführung ist die Schmiermittelpumpe innerhalb des Differentialgehäuses vorgesehen.

Differentialgehäuse weisen ein großes Volumen auf, welches durch die Integration der Schmiermittelpumpe zusammen mit dem Schmiermitteltank platzsparender genutzt werden kann. Ungenutztes Volumen innerhalb des Differentialgehäuses wird reduziert, wobei gleichzeitig Schmiermittelpumpe vor Umwelteinflüssen geschützt ist.

In einer weiteren Ausbildung ist der Schmiermitteltank dazu ausgelegt, eine Differentialanordnung derart zu umgeben, dass der Schmiermitteltank als Spritzschutz dient.

Der Schmiermitteltank umgibt wenigstens ein Zahnrad der Differentialanordnung derart, dass der Zahnkranz von einer Wand des Schmiermitteltanks umgeben ist. Hierbei wird ein Verspritzen des Schmiermittels im Differentialgehäuse vermieden und das Schmiermittel läuft in kürzerer Zeit wieder ab, steht somit in kürzerer Zeit wieder für den Schmiermittelumlauf zur Verfügung.

Bei einer Weiterbildung ist das Differentialgehäuse unmittelbar mit dem Getriebegehäuse luftdicht verbunden.

Die luft- und flüssigkeitsdichte Verbindung stellt die Herstellung des Luftdruckgefälles zwischen dem Getriebe-, dem Differentialgehäuse und dem Schmiermitteltank sicher. Das Luftdruckgefälle sorgt für eine kontinuierlichen und gleichmäßigen verwirbelungsfreien Ab- und Rücklauf des Schmiermittels nachdem dieses an die entsprechenden Schmiermittelzuführungen abgegeben wurde.

In einer weiteren Ausbildung ist die Welle eine Zapfwelle.

Besonders bei Landmaschinen und Traktoren ist eine Zapfwelle vorgesehen, um angehängte Maschinen mechanisch anzutreiben. Mit Hilfe der Auslegung zur Durchleitung einer Zapfwelle im Schmiermitteltank ist eine verbesserte Raumausnutzung ermöglicht. Besondere Umlenkungseinrichtungen für die Zapfwelle werden vermieden und die Wartung wird verringert.

Die Erfindung wird weiterhin anhand der folgenden Figuren erläutert. Dabei zeigt:
Figur 1 zeigt eine Gesamtansicht des Aufbaus, mit Getriebe- und Differentialgehäuse;
Figur 2 zeigt eine Teilansicht des Schmiermitteltanks mit der Differentialanordnung und der Welle.

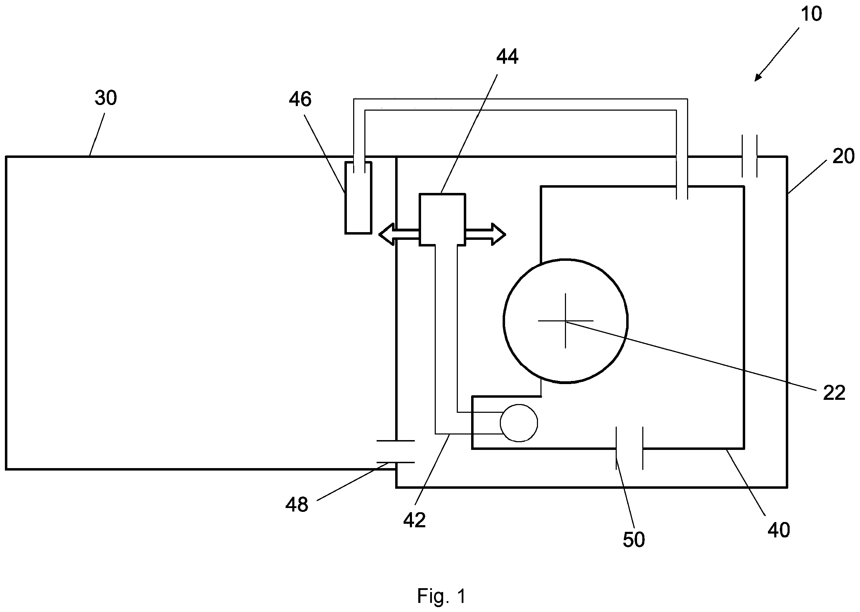

Das Getriebeschmiermittelsystem 10 in Figur 1 umfasst ein Differentialgehäuse 20, ein Getriebegehäuse 30, einen Schmiermitteltank 40, eine Ansaugleitung 42, die zu einer Schmiermittelpumpe 44 führt, eine Luftansaugpumpe 46, die Luft aus dem Schmiermitteltank 40 ansaugt und in das Getriebegehäuse fördert und einen Schmierstoffdurchlass, der Schmiermittel vom Getriebegehäuse 30 in das Differentialgehäuse 20 leitet

Das Differentialgehäuse 20 enthält eine Differentialanordnung 22 zum Antrieb von Rädern einer Achse. Der Schmiermitteltank 40 ist im Differentialgehäuse 40 untergebracht, derart, dass dieser Zahnräder der Differentialanordnung 22 umschließt und so den zur Verfügung stehen Bauraum optimal ausnutzt. Der Schmiermitteltank 40 ist entsprechend ausgeformt, so dass dieser in das Differentialgehäuse 20 eingesetzt werden kann. In einem unteren Bereich ist eine Schmiermittelansaugöffnung 50 angebracht, die das Einströmen von Schmiermittel in den Schmiermitteltank 40 ermöglicht. Im Schmiermitteltank 40 ist eine Ansaugleitung 42 untergebracht, die Schmiermittel von einem unteren Bereich des Schmiermitteltanks 40 zu einer Schmiermittelpumpe 44 befördert. Die Schmiermittelpumpe 44 transportiert das Schmiermittel an festgelegte Schmierstellen im Getriebe- und Differentialgehäuse und an weitere Stellen in der Fahrzeugmechanik.

Parallel zu angebrachten Schmiermittelpumpe 44 ist eine Luftansaugpumpe 46 vorgesehen, die Luft aus einem nicht mit Schmierstoff gefüllten, oberen Bereich des Schmiermitteltanks 40 ansaugt und in das Getriebegehäuse 30 transportiert. Das Getriebegehäuse 30 ist luftdicht mit dem Differentialgehäuse 20 verbunden. Im Getriebegehäuse 30 wird somit ein Luftüberdruck eingestellt, der sowohl über dem Luftdruck im Differentialgehäuse 20 als auch dem Luftdruck im Schmiermitteltank 40 liegt. Das Differentialgehäuse 20 ist über eine Belüftung 24 mit dem Umgebungsdruck beaufschlagt. Aufgrund des Luftdruckgefälles wird das von den Schmiermittelstellen und Bauteilen ablaufende Schmiermittel in den Schmiermitteltank 40 gedrückt. Die Ausbildung eines Schmiermittelsumpfs im Differentialgehäuse wird vermieden.

Die Schmiermittel- und Luftansaugpumpen werden durch eine Steuerung geregelt, die am Differentialgehäuse vorgesehen sein kann oder außerhalb.

Der Schmiermitteltank 40 weist bevorzugt eine C-förmige Gestalt auf. Diese ermöglicht die platzsparende Unterbringung im Differentialgehäuse 20 und die Montage durch eine Öffnung im Differentialgehäuse 20. Der Schmiermitteltank 40 kann darüber hinaus an die Form des Differentialgehäuses in Höhe, Breite und Form angepasst werden. Der Schmiermitteltank 40 kann zusätzlich eine Ablassöffnung aufweisen, um Schmiermittel in größeren Mengen aus dem Schmiermitteltank 40 entnehmen zu können.

Das Getriebegehäuse 30 kann auf jeder Seite des Differentialgehäuses 20 angebracht sein, solang eine luftdichte Verbindungsmöglichkeit mit dem Differentialgehäuse 20 gegeben ist.

Die Schmiermittelpumpe 44 kann im Differentialgehäuse 20 untergebracht sein. Dies kann jedoch auch außerhalb des Differentialgehäuses 20 montiert sein, solange die Absaugung von Schmiermittel aus dem Schmiermitteltank 40 sichergestellt ist.

Die Luftansaugpumpe 46 kann innerhalb oder außerhalb des Differentialgehäuses 20 angebracht sein, solange sichergestellt ist, dass die Luft aus dem Schmiermitteltank 40 abgesaugt und in das Getriebegehäuse 30 gepumpt wird.

Der Schmierstoffdurchlass 48 befindet sich zwischen dem Getriebegehäuse 30 und dem Differentialgehäuse 20 und lässt den Schmierstoff von einem unteren Bereich des Getriebegehäuses 30 in das Differentialgehäuse 20 fließen. Durch den unterschiedlichen Luftdruck wird das Schmiermittel in das Differentialgehäuse 20 gedrückt und fließt weiter in die Ansaugöffnung 50 des Schmiermitteltanks 40.

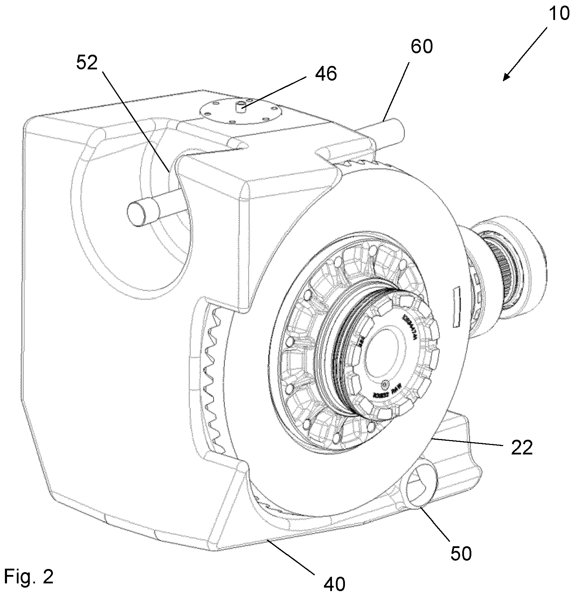

Figur 2 zeigt eine Detailansicht mit der Differentialanordnung 22. Der Schmiermitteltank 40 weist eine C-förmige Grundstruktur auf, die es weiterhin ermöglicht, diesen aus einer Richtung zu montieren. Dafür kann im Differentialgehäuse 20 eine entsprechende Öffnung vorgesehen sein.

Der Schmiermitteltank 40 ist derart ausgeformt, dass dieser um ein Zahnrad der Differentialanordnung 22 einen umschließenden, überstehenden Rand ausbildet. Dies dient gleichzeitig einem Spritzschutz und verhindert das weitflächige feine Verteilen des Schmiermittels durch die Rotation der Differentialanordnung 22. Der Schmiermitteltank weist in einem unteren Bereich eine Schmiermittelansaugöffnung 52 auf, die dazu dient, das Schmiermittel durch die Schmiermittelpumpe 44 anzusaugen und an die Schmierstellen zu leiten.

Der Schmiermitteltank 40 weist eine Durchgangsöffnung 52 auf, die den Schmiermitteltank 40 vollständig durchdringt. Die Öffnung 52 ermöglicht die Durchleitung einer Welle 60, die gleichzeitig durch das Differentialgehäuse verlegt ist. Mittels der Durchgangsöffnung 52 kann beispielsweise eine Zapfwelle vorgesehen sein, die zum weiteren Antrieb von angehängten Maschinen dient. Die Durchgangsöffnung 52 ermöglicht die platzsparende Auslegung des Schmiermitteltanks 40 und des Differentialgehäuses 20.

Die Welle 60 und die Durchgangsöffnung 52 können oberhalb oder unterhalb der Achse der Differentialanordnung 22 ausgebildet sein.

Auf einer Oberseite des Schmiermitteltanks 40 befindet sich die Ansaugöffnung für die Luftansaugpumpe 46. Durch die Anbringung in einem oberen Bereich wird die direkte Ansaugung von Schmiermittel vermieden.

Durch das Getriebeschmiermittelsystem 10 wird eine großflächige Schmiermittelansammlung am Boden des Differentialgehäuses 20 vermieden. Die Differentialanordnung 22 taucht nicht in das Schmiermittel ein, sondern wird lediglich benetzt, womit ein Verschäumen und Verteilen des Schmiermittels verhindert wird. Das Schmiermittel läuft in verkürzter Zeit in den Schmiermitteltank 40 zurück, wodurch ebenfalls die Schmiermittelmenge reduziert werden kann.

## Patentansprüche

1. Getriebeschmiersystem für ein Fahrzeug,
zum Sicherstellen von kontinuierlichem Rückfluss eines Schmiermittels,
aufweisend
ein Differentialgehäuse (20),
ein Getriebegehäuse (30),
einen Schmiermitteltank (40),
eine Ansaugleitung (42),
eine Schmiermittelpumpe (44),
eine Luftansaugpumpe (46),
wobei das Getriebegehäuse (30) mit dem Differentialgehäuse (20) luftdicht verbunden ist, und ein Schmierstoffdurchlass (48) zwischen dem Getriebegehäuse (30) und dem Differentialgehäuse (20) vorgesehen ist,
der Schmiermitteltank (40) im Differentialgehäuse (20) vorgesehen ist und eine Schmiermittelansaugöffnung (50) in einem unteren Bereich aufweist, und
die Schmiermittelpumpe (44) durch die Ansaugleitung (42) Schmiermittel aus dem Schmiermitteltank (40) befördert, und das Schmiermittel an Schmiermittelstellen im Differentialgehäuse (20) und Getriebegehäuse (30) leitet, und
die Luftansaugpumpe (46) Luft aus dem Schmiermitteltank (40) in das Getriebegehäuse (30) pumpt, so dass im Getriebegehäuse (30) ein Luftüberdruck aufrechterhalten wird, und
das Differentialgehäuse (20) Umgebungsdruck aufweist, der niedriger ist, als der Luftüberdruck im Getriebegehäuse (30), und der Luftdruck im Schmiermitteltank (40) niedriger ist, als der Umgebungsdruck im Differentialgehäuse (20),
so dass durch das Luftdruckgefälle der Schmierstoff aus dem Getriebegehäuse (30) in das Differentialgehäuse (20) und weiter in den Schmiermitteltank (40) geleitet wird.

2. Getriebeschmiersystem nach Anspruch 1, **dadurch gekennzeichnet, dass** der Schmiermitteltank (40) ausgelegt ist, eine Differentialanordnung (22) im Differentialgehäuse (20) zu umgeben, derart, dass das Schmiermittel im Schmiermitteltank (40) von der Differentialanordnung (22) getrennt ist.

3. Getriebeschmiersystem nach einem der vorangehenden Ansprüche, **dadurch gekennzeichnet, dass** der Schmiermitteltank (40) in einer C-Form aufgebaut ist, die dazu geeignet ist, eine Differentialanordnung (22) im Differentialgehäuse (20) zu umschließen.

4. Getriebeschmiersystem nach einem der vorangehenden Ansprüche, **dadurch gekennzeichnet, dass** die Luftansaugpumpe (46) die Luft aus einem oberen Bereich des Schmiermitteltanks (40) ansaugt.

5. Getriebeschmiersystem nach einem der vorangehenden Ansprüche, **dadurch gekennzeichnet, dass** der Schmiermitteltank (40) eine Durchgangsöffnung (52) aufweist, die dazu ausgelegt ist, den Durchgang einer Welle (60) zu ermöglichen.

6. Getriebeschmiersystem nach einem der vorangehenden Ansprüche, **dadurch gekennzeichnet, dass** die Schmiermittelpumpe (44) innerhalb des Differentialgehäuses (20) vorgesehen ist.

7. Getriebeschmiersystem nach einem der vorangehenden Ansprüche, **dadurch gekennzeichnet, dass** der Schmiermitteltank (40) dazu ausgelegt ist, eine Differentialanordnung (22) derart zu umgeben, dass der Schmiermitteltank (40) als Spritzschutz dient.

8. Getriebeschmiersystem nach einem der vorangehenden Ansprüche, **dadurch gekennzeichnet, dass** das Differentialgehäuse (20) unmittelbar mit dem Getriebegehäuse (30) luftdicht verbunden ist.

9. Getriebeschmiersystem nach Anspruch 5, **dadurch gekennzeichnet, dass** die Welle (60) eine Zapfwelle ist.

## Claims

1. Transmission lubrication system for a vehicle,
for ensuring a continuous return flow of a lubricant,
having
a differential housing (20),
a transmission housing (30),
a lubricant tank (40),
an intake line (42),
a lubricant pump (44),
an air-intake pump (46),
wherein the transmission housing (30) is connected in an air-tight manner to the differential housing (20), and a lubricant passage (48) is provided between the transmission housing (30) and the differential housing (20),
the lubricant tank (40) is provided in the differential housing (20) and has a lubricant intake opening (50) in a lower region, and
the lubricant pump (44) conveys lubricant from the lubricant tank (40) by way of the intake line (42) and directs the lubricant to lubricant points in the differential housing (20) and transmission housing (30), and
the air-intake pump (46) pumps air from the lubricant tank (40) into the transmission housing (30) such that a positive air pressure is maintained in the transmission housing (30), and
the differential housing (20) is at ambient pressure, which is lower than the positive air pressure in the transmission housing (30), and the air pressure in the lubricant tank (40) is lower than the ambient pressure in the differential housing (20),
such that, as a result of the air-pressure drop, the lubricant is directed from the transmission housing (30) into the differential housing (20) and onward into the lubricant tank (40).

2. Transmission lubrication system according to Claim 1, **characterized in that** the lubricant tank (40) is configured to surround a differential arrangement (22) in the differential housing (20) in such a way that the lubricant in the lubricant tank (40) is separated from the differential arrangement (22).

3. Transmission lubrication system according to either of the preceding claims, **characterized in that** the lubricant tank (40) is constructed in a shape of a C suitable for surrounding a differential arrangement (22) in the differential housing (20).

4. Transmission lubrication system according to one of the preceding claims, **characterized in that** the air-intake pump (46) sucks the air in from an upper region of the lubricant tank (40).

5. Transmission lubrication system according to one of the preceding claims, **characterized in that** the lubricant tank (40) has a through-opening (52) which is configured for allowing passage of a shaft (60).

6. Transmission lubrication system according to one of the preceding claims, **characterized in that** the lubricant pump (44) is provided within the differential housing (20).

7. Transmission lubrication system according to one of the preceding claims, **characterized in that** the lubricant tank (40) is configured to surround a differential arrangement (22) in such a way that the lubricant tank (40) serves as a splash guard.

8. Transmission lubrication system according to one of the preceding claims, **characterized in that** the differential housing (20) is directly connected in an air-tight manner to the transmission housing (30) .

9. Transmission lubrication system according to Claim 5, **characterized in that** the shaft (60) is a power-take-off shaft.

## Revendications

1. Système de lubrification d'engrenages pour un véhicule,
permettant de s'assurer le retour continu d'un lubrifiant,
comprenant
un carter de différentiel (20)
un carter d'engrenages (30),
un réservoir de lubrifiant (40),
une conduite d'aspiration (42),
une pompe à lubrifiant (44),
une pompe d'aspiration d'air (46),
dans lequel le carter d'engrenages (30) est relié de manière étanche à l'air avec le carter de différentiel (20) et un passage de lubrifiant (48) est prévu entre le carter d'engrenages (30) et le carter de différentiel (20),
le réservoir de lubrifiant (40) est prévu dans le carter de différentiel (20) et comprend une ouverture d'aspiration de lubrifiant (50) dans une partie inférieure et
la pompe de lubrifiant (44) transporte, par la conduite d'aspiration (42), du lubrifiant hors du réservoir de lubrifiant (40) et conduit le lubrifiant vers des points de lubrification dans le carter de différentiel (20) et le carter d'engrenages (30) et
la pompe d'aspiration d'air (46) pompe de l'air hors du réservoir de lubrifiant (40) vers le carter d'engrenages (30) de façon à maintenir une surpression d'air dans le carter d'engrenages (30), et
le carter de différentiel (20) présente une pression ambiante qui est plus faible que la surpression d'air dans le carter d'engrenages (30), et la pression d'air dans le réservoir de lubrifiant (40) est plus faible que la pression ambiante dans le carter de différentiel (20),
de façon à ce que, grâce à la chute de pression, le lubrifiant soit conduit hors du carter d'engrenages (30) vers le carter de différentiel (20) puis dans le réservoir de lubrifiant (40).

2. Système de lubrification d'engrenages selon la revendication 1, **caractérisé en ce que** le réservoir de lubrifiant (40) est conçu pour entourer un dispositif différentiel (22) dans le carter de différentiel (20), de façon à ce que le lubrifiant dans le réservoir de lubrifiant (40) soit séparé du dispositif différentiel (22) .

3. Système de lubrification d'engrenages selon l'une des revendications précédentes, **caractérisé en ce que** le réservoir de lubrifiant (40) est construit en une forme de C qui est appropriée pour entourer un dispositif différentiel (22) dans le carter de différentiel (20).

4. Système de lubrification d'engrenages selon l'une des revendications précédentes, **caractérisé en ce que** la pompe d'aspiration d'air (46) aspire l'air depuis une partie supérieure du réservoir de lubrifiant (40).

5. Système de lubrification d'engrenages selon l'une des revendications précédentes, **caractérisé en ce que** le réservoir de lubrifiant (40) comprend une ouverture de passage (52) qui est conçue pour permettre le passage d'un arbre (60).

6. Système de lubrification d'engrenages selon l'une des revendications précédentes, **caractérisé en ce que** la pompe de lubrifiant (44) est disposée à l'intérieur du carter de différentiel (20).

7. Système de lubrification d'engrenages selon l'une des revendications précédentes, **caractérisé en ce que** le réservoir de lubrifiant (40) est conçu pour entourer un dispositif différentiel (22) de façon à ce que le réservoir de lubrifiant (40) serve de protection contre les projections.

8. Système de lubrification d'engrenages selon l'une des revendications précédentes, **caractérisé en ce que** le carter de différentiel (20) est relié directement, de manière étanche à l'air, au carter d'engrenages (30).

9. Système de lubrification d'engrenages selon la revendication 5, **caractérisé en ce que** l'arbre (60) est une prise de force.
